# EUROPÄISCHE PATENTSCHRIFT

(11) **EP 2 820 263 B1**
(45) Veröffentlichungstag und Bekanntmachung des Hinweises auf die Patenterteilung: **20.04.2016**
(21) Anmeldenummer: 13708394.5
(22) Anmeldetag: 28.02.2013
(51) Int. Cl.: F01N 9/00, F01N 3/20

(54) **Verfahren zum Betreiben eines Heizkatalysators**
Method for operating a catalyst with an electrical heater
Procédé pour faire fonctionner un catalyseur avec dispositif de chauffage électrique

(30) Priorität: 02.03.2012 DE 102012004267; 07.08.2012 DE 102012107207
(43) Veröffentlichungstag der Anmeldung: 07.01.2015
(73) Patentinhaber: Continental Automotive GmbH, 30165 Hannover (DE)
(72) Erfinder: HIRTH, Peter, 51503 Rösrath (DE); BAUER, Peter, 53721 Siegburg (DE); HODGSON, Jan, 53840 Troisdorf (DE)
(86) Internationale Anmeldenummer: PCT/EP2013/054065
(87) Internationale Veröffentlichungsnummer: WO 2013/127936

(56) Entgegenhaltungen:
- EP-A1- 2 256 312
- WO-A1-2011/120838

## Beschreibung

Die Erfindung betrifft ein Verfahren zum Betreiben einer Abgasbehandlungsvorrichtung mit einer Heizung zum Heizen eines Abgasstroms in der Abgasbehandlungsvorrichtung. Zusätzlich ist in der Abgasbehandlungsvorrichtung eine Zufuhrstelle vorgesehen, an welcher ein Additiv in die Abgasbehandlungsvorrichtung zugegeben werden kann.

Abgasbehandlungsvorrichtungen, in welche ein Additiv zur Abgasreinigung zugegeben wird, sind auch im Kraftfahrzeugbereich weit verbreitet. Ein Beispiel für solche Abgasbehandlungsvorrichtungen sind Abgasbehandlungsvorrichtung, in denen das Verfahren der selektiven katalytischen Reduktion [SCR-Verfahren, SCR = selective catalytic reduction] durchgeführt wird. Bei diesem Verfahren werden Stickstoffoxidverbindungen im Abgas unter Zuhilfenahme eines Reduktionsmittels (welches als Additiv dem Abgas zugeführt wird) gereinigt. Weitere Abgasbehandlungsvorrichtungen, denen ein Additiv zugeführt wird, sind Abgasbehandlungsvorrichtungen, in welche Kohlenwasserstoffe (insbesondere Kraftstoff) zugeführt wird, um auf einem Katalysator verbrannt zu werden und die Temperatur der Abgase zu erhöhen. So kann erreicht werden, dass bestimmte thermisch aktivierte Umsetzungsreaktionen in der Abgasbehandlungsvorrichtung (und insbesondere in Filtern) auftreten.

Es hat sich herausgestellt, dass eine Heizung zum Heizen eines Abgasstroms durch Abgas und/oder Abgasbestandteile gegebenenfalls verschmutzt oder sogar zugesetzt werden kann. Hierdurch erhöht sich einerseits der von der Heizung in der Abgasbehandlungsvorrichtung bewirkte Strömungswiderstand für die Abgase. Außerdem wird die Heizleistung der Heizvorrichtung negativ beeinflusst, weil das Abgas aufgrund der Ablagerungen auf der Heizung nicht ausreichend geheizt werden kann.

Aus der WO 2011/120338 A1 ist ein Verfahren zum Betrieb einer Abgasbehandlungsvorrichtung bekannt. Ein Reduktionsmittel kann dem Abgas über einen Injektor zugegeben werden. Es wird darüber hinaus ein Heizer für die Abgasbehandlungsvorrichtung verwendet.

Hiervon ausgehend ist es Aufgabe der hier vorliegenden Erfindung, die geschilderten technischen Probleme zu lösen bzw. zumindest zu lindern. Es soll insbesondere ein besonders vorteilhaftes Verfahren zum Betreiben einer Abgasbehandlungsvorrichtung mit einer elektrischen Heizung vorgestellt werden.

Diese Aufgaben werden gelöst mit einem Verfahren gemäß den Merkmalen des Patentanspruchs 1. Weitere vorteilhafte Ausgestaltungen des Verfahrens sind in den abhängig formulierten Patentansprüchen angegeben. Die in den Patentansprüchen einzeln aufgeführten Merkmale sind in beliebiger, technologisch sinnvoller, Weise miteinander kombinierbar und können durch erläuternde Sachverhalte aus der Beschreibung ergänzt werden, wobei weitere Ausführungsvarianten der Erfindung aufgezeigt werden.

Die Erfindung betrifft ein Verfahren zum Betreiben einer Abgasbehandlungsvorrichtung mit einer elektrischen Heizung zum Heizen zumindest eines Abgasstroms oder einer Oberfläche in der Abgasbehandlungsvorrichtung und mit einer Zufuhrstelle zur Zufuhr eines Additivs in die Abgasbehandlungsvorrichtung, so dass das Additiv auf die elektrische Heizung trifft, aufweisend die folgenden Schritte:
a) Zufuhr von Additiv an der Zufuhrstelle;
b) Feststellen eines Betriebszustands der Abgasbehandlungsvorrichtung, in dem Ablagerungen auf der elektrischen Heizung auftreten können, anhand zumindest einer Zustandsgröße;
c) Festlegen einer Taktfrequenz in Abhängigkeit des Betriebszustands, wenn der in Schritt b) festgestellte Betriebszustand in einem vorgegebenen Betriebszustandsbereich liegt;
d) Getaktetes Aktivieren und Deaktivieren der elektrischen Heizung mit der festgelegten Taktfrequenz, wenn der in Schritt b) festgestellte Betriebszustand in dem vorgegebenen Betriebszustandsbereich liegt.

Die Abgasbehandlungsvorrichtung dient üblicherweise der Reinigung der Abgase einer Verbrennungskraftmaschine. Dazu ist die Abgasbehandlungsvorrichtung an die Verbrennungskraftmaschine angeschlossen.

Die elektrische Heizung wird vorzugsweise mit einem elektrischen Strom betrieben, welcher insbesondere vom Bordnetz eines Kraftfahrzeugs bereitgestellt wird. Die Heizung weist vorzugsweise einen elektrischen Heizkörper auf, welcher in der Abgasbehandlungsvorrichtung von dem Abgasstrom umströmbar ist und die beim Heizen produzierte Wärme daher an den Abgasstrom abgeben kann. In einer Ausführungsvariante des Verfahrens dient die Heizung dazu, den Abgasstrom in der Abgasbehandlungsvorrichtung aufzuheizen. In einer weiteren Ausführungsvariante dient die Heizung dazu, eine Oberfläche in der Abgasbehandlungsvorrichtung aufzuheizen. Diese Oberfläche steht vorzugsweise mit dem Abgasstrom in Kontakt und kann beispielsweise eine Oberfläche eines Wabenkörpers sein. Diese Oberfläche kann eine Oberfläche der Heizung selbst sein. Gemäß einer bevorzugten Ausführungsvariante des Verfahrens dient die Heizung dazu, sowohl den Abgasstrom als auch eine Oberfläche aufzuheizen. Die Zufuhrstelle kann beispielsweise ein Ventil bzw. einen Injektor umfassen, mit welchem die der Abgasbehandlungsvorrichtung zugegebene Menge an Additiv reguliert werden kann.

Gemäß dem beschriebenen Verfahren erfolgt zunächst eine Zufuhr des Additivs an der Zufuhrstelle. Die Zufuhr des Additivs erfolgt vorzugsweise unabhängig von der Heizung des Abgasstroms. Es wird vorzugsweise so viel Additiv zugeführt, wie von einer in der Abgasbehandlungsvorrichtung vorgesehenen Abgasreinigungskomponente (beispielsweise einem SCR-Katalysator, einem Oxidationskatalysator oder einem Adsorber) benötigt wird.

In Schritt b) wird als Betriebszustand insbesondere ein aus verschiedenen Betriebsparametern der Abgasbehandlungsvorrichtung berechneter Wert oder ein aus verschiedenen Betriebsparametern zusammengestellte Parameterschar als Betriebszustand festgestellt. Dies kann beispielsweise anhand von Betriebsparametern geschehen, welche in der Abgasbehandlungsvorrichtung gemessen werden, wie beispielsweise anhand von Temperaturen. Es kann beispielsweise die Temperatur des Abgases selbst verwendet werden oder aber auch eine Temperatur einer Abgasleitung, welche das Abgas leitet. Eine solche Temperatur ist für die Temperatur des Abgases repräsentativ. Auch ist es möglich, dass ein Betriebsparameter der Abgasbehandlungsvorrichtung für den Betriebszustand aus verschiedenen Betriebsgrößen einer an die Abgasbehandlungsvorrichtung angeschlossenen Verbrennungskraftmaschine berechnet wird. Beispielsweise lässt sich ein Massenstrom durch die Abgasbehandlungsvorrichtung aus einer von der Verbrennungskraftmaschine verbrannten Luft- und Kraftstoffmasse berechnen und als Betriebszustand für Schritt b) verwenden.

In Schritt c) wird der in Schritt b) festgestellte Betriebszustand mit einem vorgegebenen Betriebszustandsbereich verglichen. Der Betriebszustandsbereich hat bestimmte Grenzbetriebszustände, zwischen welchen der vorgegebene Betriebszustandsbereich liegt. Wenn der in Schritt b) festgestellte Betriebszustand innerhalb dieser Betriebszustandsgrenzen liegt, liegt der in Schritt b) festgestellte Betriebszustand in dem vorgegebenen Betriebszustandsbereich. Der vorgegebene Betriebszustandsbereich ist vorzugsweise beidseitig durch Grenzwerte begrenzt und nicht einseitig offen.

In einer einfachen Ausführungsvariante des Verfahrens ist der Betriebszustand eine in der Abgasbehandlungsvorrichtung gemessene Temperatur und der Betriebszustandsbereich ein vorgegebener Temperaturbereich. Beispielsweise kann der Betriebszustandsbereich bei 100 C beginnen und bis 180 C gehen. Der Betriebszustand liegt dann im vorgegebenen Betriebszustandsbereich, wenn die gemessene Temperatur im angegebenen Temperaturbereich liegt.

Die Taktfrequenz wird vorzugsweise nach einer vorgegebenen Berechnungsformel aus den Betriebsparametern berechnet, welche den Betriebszustandsbereich kennzeichnen. In einer Ausführungsvariante des erfindungsgemäßen Verfahrens, in welcher der Betriebszustand lediglich eine in der Abgasbehandlungsvorrichtung gemessene Temperatur ist, kann die Taktfrequenz beispielsweise als Funktion der Temperatur festgelegt werden.

In Schritt d) erfolgt der Vergleich des in Schritt b) festgestellten (aktuellen/bevorstehenden) Betriebszustands mit dem vorgegebenen Betriebszustandsbereich vorzugsweise so wie in Schritt c). Das Aktivieren und Deaktivieren der Heizung erfolgt bei einer mit elektrischem Strom betriebenen Heizung durch ein Aktivieren und Deaktivieren des Stroms, welcher durch die Heizung fließt. Die in Schritt c) festgelegte Taktfrequenz ist vorzugsweise durch eine Wiederholrate (beispielsweise in Hertz angegeben) gekennzeichnet. Die Wiederholrate kann beispielsweise zwischen 1 Kilohertz (1000 Wiederholungen pro Sekunde) und 0,001 Hertz (alle 1000 Sekunden eine Wiederholung) liegen. Besonders bevorzugt ist eine Wiederholrate zwischen 4 Hertz (alle 0,25 Sekunden) und 0,5 Hertz (alle 2 Sekunden). Auch bevorzugt ist eine Widerholrate zwischen 0,05 Hertz (alle 20 Sekunden) und 0,005 (als 200 Sekunden). Die hier angegebenen Wiederholraten gelten insbesondere für den Fall, wenn die Verbrennungskraftmaschine im Niedriglastbereich betrieben wird. Die Taktfrequenz wird in Schritt c) vorzugsweise in Abhängigkeit eines Speichermodells eines Ammoniakspeichers der Abgasbehandlungsvorrichtung festgelegt. Der Ammoniakspeicher ist vorzugsweise in Form einer Speicherbeschichtung ausgebildet, die beispielsweise in einen SCR-Katalysator ausgebildet sein kann. Das Speichermodell kann in einer Datenverarbeitungseinrichtung hinterlegt sein und ermöglicht eine Abschätzung der Menge an gespeicherten Ammoniak in dem Ammoniakspeicher. Mit dem Speichermodell können als Parameter beispielsweise die Temperatur des Ammoniakspeichers und die zugeführten Mengen an flüssigem Additiv verwendet werden, um die Menge an gespeichertem Ammoniak zu bestimmen. Zusätzlich können weitere Parameter zur Bestimmung der Menge an gespeichertem Ammoniak berücksichtigt werden.

Der vorgegebene Betriebszustandsbereich ist vorzugsweise ein Betriebszustandsbereich, in dem vermehrt Ablagerungen auf der Heizung auftreten. Der Betriebszustandsbereich ist beispielsweise ein Betriebszustandsbereich, in welchem eine erwünschte Umsetzungsreaktion des Additivs zwar teilweise stattfindet oder beginnt stattzufinden, aber nicht vollständig erfolgt und sich so Rückstände auf der Heizung bilden können. Es hat sich gezeigt, dass es vorteilhaft ist, die Heizung dann getaktet so zu betreiben, dass die Ablagerungen bzw. die Rückstände des Additivs auf der Heizung umgesetzt und/oder verbrannt werden. Dies kann durch den getakteten Betrieb der Heizung mit besonders wenig Energieaufwand erreicht werden.

Es ist besonders vorteilhaft, wenn die Oberfläche, auf welcher sich Ablagerungen bilden, durch die Heizung unmittelbar aufgeheizt wird, weil dann Ablagerungen auf dieser Oberfläche besonders effektiv umgesetzt und/oder verbrannt werden können.

Besonders vorteilhaft ist das Verfahren, wenn die Heizung einen elektrisch beheizbaren Wabenkörper umfasst. Ein solcher Wabenkörper weist beispielsweise eine Vielzahl von für das Abgas durchströmbaren Kanälen auf. Ein solcher Heizwabenkörper ist insbesondere mechanisch stabil und vor allem wesentlich stabiler als eine Heizung, welche aus in der Abgasbehandlungsvorrichtung aufgespannten Heizdrähten ausgebildet ist. Darüber hinaus hat ein solcher Wabenkörper eine besonders große Oberfläche, durch welche Wärme von dem Wabenkörper an das Abgas abgegeben werden kann. Problematisch ist gegebenenfalls, dass ein solcher Wabenkörper sehr kleine Kanäle hat, welche relativ leicht verstopfen können. Diese Kanäle können dann mit dem beschriebenen Verfahren gereinigt (bzw. von Ablagerungen befreit) werden. Der beheizbare Wabenkörper kann zumindest teilweise mit einer wirksamen Beschichtung beschichtet sein. Eine wirksame Beschichtung kann Bestandteile des Abgases oder des Additivs umsetzen und/oder speichern.

Weiterhin vorteilhaft ist das Verfahren, wenn das Additiv ein Reduktionsmittel ist und in einer Abgasströmungsrichtung hinter der Zufuhrstelle zumindest ein SCR-Katalysator in der Abgasbehandlungsvorrichtung angeordnet ist.

Die Abgasbehandlungsvorrichtung, welche nach dem erfindungsgemäßen Verfahren betrieben werden kann, umfasst neben der Heizung vorzugsweise beispielsweise einen SCR-Katalysator, einen Speicherkatalysator, einen Oxidationskatalysator und/oder einen Adsorber.

In dem SCR-Katalysator findet das Verfahren der selektiven katalytischen Reduktion statt. Als Additiv wird dann Reduktionsmittel, vorzugsweise flüssige Harnstoff-Wasser-Lösung, zugeführt. Ein typisches als Reduktionsmittel für die selektive katalytische Reduktion verwendetes Additiv ist eine 32,5-%ige Harnstoff-Wasser-Lösung, welche unter dem Handelsnamen AdBlue^{®} erhältlich ist. Eine solche Lösung bildet besonders fest sitzende Ablagerungen, wenn die Temperatur nur zur teilweisen Umsetzung der Lösung in Ammoniak ausreicht und insbesondere nicht ausreicht, um die Lösung vollständig zu verdampfen. Dann verbleibt ein Teil des Harnstoffes aus der Lösung als Ausscheidung auf den Flächen, auf die das nicht verdampfte, flüssige Reduktionsmittel in der Abgasbehandlungsvorrichtung trifft. In einem Speicherkatalysator kann Ammoniak für die selektive, katalytische Reduktion zwischengespeichert werden. Ein Speicherkatalysator und einen SCR-Katalysator können gemeinsam in einem Wabenkörper realisiert sein, wobei der Wabenkörper eine Beschichtung aufweist, welche sowohl Ammoniak speichernde Komponenten als auch Komponenten zur Begünstigung der selektiven katalytischen Reduktion aufweist.

In einer weiteren Ausführungsform umfasst die Abgasbehandlungsvorrichtung einen Oxidationskatalysator und/oder einen Adsorber. Wenn in der Abgasbehandlungsvorrichtung ein Oxidationskatalysator und/oder ein Adsorber eingesetzt sind, wird als Additiv vorzugsweise Kohlenwasserstoff, insbesondere Kraftstoff (bzw. der für die angeschlossene Verbrennungskraftmaschine verwendete Kraftstoff) zugeführt. Mithilfe der Kohlenwasserstoffe wird die Temperatur in der Abgasbehandlungsvorrichtung erhöht. Dazu werden die Kohlenwasserstoffe auf einem hierfür vorgesehenen Katalysator (vorzugsweise ein Platinkatalysator) verbrannt. Durch die erhöhte Temperatur können bestimmte Umsetzungsreaktionen in dem Oxidationskatalysator aktiviert werden bzw. es wird ermöglicht, den Adsorber von dem eingelagerten Abgasbestandteilen zu befreien. Ein Adsorber hat die Aufgabe, insbesondere während des Kaltstarts einer Verbrennungskraftmaschine die Schadstoffe, welche von der Verbrennungskraftmaschine erzeugt werden, zumindest zeitweise zwischenzuspeichern. Dies ist insbesondere dann vorteilhaft, wenn die Temperatur der Abgasbehandlungsvorrichtung während des Kaltstarts noch niedrig ist und bestimmte Umsetzungsreaktionen in der Abgasbehandlungsvorrichtung daher noch nicht stattfinden können. Später, wenn die Temperatur in der Abgasbehandlungsvorrichtung über bestimmte Schwelltemperaturen gestiegen ist, können die in dem Adsorber gespeicherten Schadstoffe freigegeben/umgesetzt werden.

Die Beschichtung für einen Adsorber, einen Oxidationskatalysator, einen SCR-Katalysator und/oder einen Speicherkatalysator kann auch zumindest teilweise auf dem elektrisch beheizbaren Wabenkörper vorgesehen sein.

Auch vorteilhaft ist das Verfahren, wenn in Schritt b) zumindest eine der folgenden Zustandsgrößen zum Feststellen des Betriebszustands verwendet wird:
- zumindest eine Temperatur;
- ein Massenstrom des Additiv durch die Zufuhrstelle in die Abgasbehandlungsvorrichtung hinein; und
- ein Massenstrom des Abgasstroms in der Abgasbehandlungsvorrichtung.

Die Temperatur kann beispielsweise eine in der Abgasbehandlungsvorrichtung gemessene Abgastemperatur und/oder eine Temperatur einer Wand der Abgasbehandlungsvorrichtung sein. Die Temperatur ist für die Bildung von Ablagerungen besonders relevant, weil die Umsetzungsreaktion, mit welcher das Additiv umgesetzt wird, maßgeblich von der Temperatur abhängt und damit auch die Bildung von Ablagerung von der Temperatur abhängt. Der Massenstrom des Additivs bestimmt im Wesentlichen, wie schnell und wie viele Ablagerung sich auf der Heizung bilden. Beispielsweise kann es vorteilhaft sein, die Taktfrequenz zu erhöhen, wenn der Massenstrom des Additivs erhöht ist. Der Massenstrom wirkt auf die Ablagerungen erosiv. Daher ist es auch vorteilhaft, den Massenstrom des Abgasstroms in der Abgasbehandlungsvorrichtung für das Verfahren zu berücksichtigen. Besonders bevorzugt werden alle drei genannten Parameter für das Verfahren verwendet.

Auch vorteilhaft ist das beschriebene Verfahren, wenn in Schritt c) neben der Taktfrequenz auch eine Heizperiode festgelegt wird, mit welcher die Heizung während der Taktlänge der Taktfrequenz jeweils betrieben wird. Die Heizperiode ist vorzugsweise durch eine Heizdauer gekennzeichnet. Die Heizperiode kann beispielsweise zwischen 1 Millisekunde und 20 Sekunden lang sein. Wenn die Taktfrequenz des Betriebs der Heizung im bevorzugten Bereich zwischen 4 Hertz und 0,5 Hertz, bzw. zwischen 0,05 Hertz und 0,005 Hertz liegt (und die Taktlänge damit zwischen 0,25 Sekunden und 2 Sekunden bzw. zwischen 20 Sekunden und 200 Sekunden liegt), ist die Heizperiode allerdings vorzugsweise zwischen 1 Sekunde und 20 Sekunden lang.

Eine solche Heizperiode reicht aus, um die Ablagerungen auf der Heizung effektiv zu beseitigen (bzw. abzubrennen). Gleichzeitig ist der Eintrag an Heizenergie in die Abgasbehandlungsvorrichtung noch relativ gering. Es tritt insbesondere keine signifikante Erhöhung der Abgastemperatur auf. Durch eine Anpassung der Heizperiode kann erreicht werden, dass genau so viel Heizenergie in die Abgasbehandlungsvorrichtung eingebracht wird, wie zum Abbrennen der vorhandenen Ablagerungen tatsächlich notwendig ist. Die Taktlänge gibt das Zeitintervall vom Beginn einer Heizperiode zu dem Beginn der nächsten Heizperiode an und ergibt sich beispielsweise als Kehrwert der Taktfrequenz.

Darüber hinaus ist das Verfahren vorteilhaft, wenn die Taktfrequenz so gewählt ist, dass die Heizung zu weniger als 20 Prozent der Betriebszeit der Abgasbehandlungsvorrichtung aktiviert ist, während der Betriebszustand der Abgasbehandlungsvorrichtung in dem vorgegebenen Betriebszustandsbereich liegt. Vorzugsweise ist die Heizung sogar zu weniger als 10 % und besonders bevorzugt zu weniger als 5 % aktiviert. Besonders bevorzugt ist es, wenn die Heizung sogar zu weniger als 2 % der Betriebszeit der Abgasbehandlungsvorrichtung aktiviert ist. Dabei können die höheren Grenzen insbesondere für einen Betrieb des Kraftfahrzeugs im Stadtverkehr Anwendung finden. Durch das erfindungsgemäße Verfahren wird über die Betriebszeit gemittelt vorzugsweise eine Heizleistung von weniger als 500 Watt, bevorzugt weniger als 100 Watt und besonders bevorzugt weniger als 50 Watt in die Abgasbehandlungsvorrichtung eingebracht. So kann ein besonders energiesparender Betrieb des Verfahrens realisiert werden und trotzdem werden Ablagerungen auf der Heizung effektiv entfernt.
Außerdem ist das Verfahren vorteilhaft, wenn eine Temperatur des Abgasstroms in der Abgasbehandlungsvorrichtung durch den getakteten Betrieb der Heizung um weniger als 50 C angehoben wird, vorzugsweise sogar um weniger als 25 °C. Außerdem ist das Verfahren vorteilhaft, wenn eine Temperatur des Abgasstroms in der Abgasbehandlungsvorrichtung durch den getakteten Betrieb der Heizung um weniger als 15 C, vorzugsweise weniger als 5 C und besonders bevorzugt weniger als 2 C angehoben wird. Durch einen derartigen Betrieb der Heizung nur zu einem geringen Zeitanteil der Betriebszeit und mit einer geringen Anhebung der Temperatur des Abgasstroms kann ein besonders energiesparender Betrieb des Verfahrens realisiert werden, bei welchem trotzdem Ablagerungen auf der Heizung effektiv entfernt werden.

Die vorstehend angeführte Betriebsweise ist insbesondere dann vorteilhaft, wenn die Heizung in einem Zustand und/oder von einer Gestalt ist, in dem der Wärmetransfer an das Abgas reduziert ist. Hierbei kann die Heizung beispielsweise eine kleine beheizte Fläche aufweisen, so dass von der Heizung wenig Wärme an den Abgasstrom abgegeben wird. Auch ist möglich, dass eine beheizte Oberfläche der Heizung bzw. ein beheizter Bereich zumindest teilweise von der Abgasströmung abgeschirmt ist, so dass nur ein Anteil der Abgasströmung in wärmeleitenden Kontakt zu der Heizung gelangt. Die Heizung kann beispielsweise im Strömungsschatten eines anderen Bauteils in der Abgasbehandlungsvorrichtung angeordnet sein. Auch möglich ist, dass die Heizung aus einem Material ist, dessen Oberfläche einen niedrigen Wärmeübergangskoeffizienten an das Abgas aufweist.

Insbesondere in diesem Zusammenhang ist es bevorzugt, dass eine Zufuhrvorrichtung für das flüssige Additiv so angeordnet ist, dass das flüssige Additiv möglichst vollständig auf die Heizung trifft. So kann erreicht werden, dass lokal und/oder in unmittelbarer Umgebung der Heizung bzw. an der Heizung eine starke Temperaturerhöhung durch die Heizung erreicht wird und eine Umsetzung des flüssigen Additivs erfolgt. Somit können Ablagerungen des flüssigen Additivs auf der Heizung besonders effektiv verdampft, abgebrannt und/oder sogar vermieden werden. Gleichzeitig wird nur eine geringe Menge an Heizenergie benötigt, weil der Abgasstrom nur zu einem geringen Maß erwärmt wird.

Darüber hinaus vorteilhaft ist das Verfahren, wenn die Zufuhrstelle in einer Abgasströmungsrichtung durch die Abgasbehandlungsvorrichtung vor der Heizung angeordnet ist und das Additiv mit der Abgasströmungsrichtung zugegeben wird. Das Additiv trifft dann auf die Heizung, wobei das Additiv vorzugsweise noch in flüssiger Form (noch nicht verdampft) auf die Heizung trifft. Das flüssige Additiv trifft vorzugsweise in Tropfenform auf die Heizung. Wenn das flüssige Additiv Reduktionsmittel (und insbesondere Harnstoff-Wasser-Lösung ist), kann es an der Heizung zumindest teilweise chemisch umgesetzt werden. Umsetzungsprodukt ist vorzugsweise Ammoniak. Wenn die chemische Umsetzung (beispielsweise aufgrund von niedrigen Abgastemperaturen) nicht vollständig stattfindet, können Ablagerungen auf der Heizung gebildet werden. Diese Ablagerungen bestehen beispielsweise aus kristallinem Harnstoff. Die Ablagerungen können durch das beschriebene Verfahren beispielsweise abgetragen und/oder aufgelöst werden.

In Ammoniak umgesetztes Reduktionsmittel wird vorzugsweise in einem Speicher zwischengespeichert um später für die Reduktion von Schadstoffen im Abgas genutzt zu werden. Der Speicher kann beispielsweise in einem SCR-Katalysator als Beschichtung vorgesehen sein. Die Beschichtung bindet den Ammoniak vorrübergehend. Wenn der Speicher voll (bzw. vollständig beladen) ist, kann zusätzlich in der Abgasbehandlungsvorrichtung vorliegender Ammoniak (bzw. zusätzlich zugeführtes Reduktionsmittel) auch Ablagerungen bilden. Auch diese Ablagerungen können mit dem beschriebenen Verfahren beispielsweise abgetragen und/oder aufgelöst werden.

Auch vorteilhaft ist das Verfahren, wenn die Zufuhrstelle in einer Abgasströmungsrichtung durch die Abgasbehandlungsvorrichtung hinter der Heizung angeordnet ist und das Additiv entgegen der Abgasströmungsrichtung zugegeben wird. Das flüssige Additiv wird vorzugsweise mit einem Druck zugeführt, welcher ausreichend ist, damit das flüssige Additiv an der Zufuhrstelle derart beschleunigt wird, dass es entgegengesetzt zu der Abgasströmung durch die Abgasbehandlungsvorrichtung bis hin zu der Heizung gelangt. Auch bei dieser Ausführungsvariante können Ablagerungen auftreten, die durch das beschriebene Verfahren abgetragen und/oder aufgelöst werden können.

Weiter ist das Verfahren vorteilhaft, wenn die Zufuhr von Additiv in Schritt a) an zumindest einem vorgegebenen Einspritzzeitpunkt erfolgt, wobei dieser zumindest eine vorgegebene Einspritzzeitpunkt zumindest an die Taktfrequenz der Aktivierung der Heizung angepasst ist. Ganz besonders bevorzugt ist dieser zumindest eine vorgegebene Einspritzzeitpunkt auch an die Taktlänge der Aktivierung der Heizung angepasst.

Vorzugweise wird außer einem Einspritzzeitpunkt auch zumindest eine Einspritzdauer an die Taktfrequenz und gegebenenfalls auch die Taktlänge der Aktivierung der Heizung angepasst. Es ist beispielsweise möglich, dass der Einspritzzeitpunkt (und die Einspritzdauer) so festgelegt wird, dass die Zufuhr von Additiv unmittelbar vor der Aktivierung der Heizung erfolgt. Gegebenenfalls kann die Einspritzdauer auch mit der Aktivierung der Heizung überlappen. Die Zufuhr von flüssigem Additiv kann dann mit einer Taktfrequenz erfolgen, die der Taktfrequenz der Aktivierung der Heizung entspricht, wobei die einzelnen Betriebstakte der Zufuhr gegenüber den Betriebstakten der Heizung verschoben sind. Hierbei ist es einerseits möglich, dass für jede Aktivierung der Heizung zu einem vorgegebenen Einspritzzeitpunkt eine Zufuhr von Additiv erfolgt. Andererseits ist es auch möglich, dass für eine Mehrzahl von Aktivierungen der Heizung eine gemeinsame (fortlaufende) Zufuhr von Additiv zu einem vorgegebenen Einspritzzeitpunkt erfolgt. Mit einer Mehrzahl von Aktivierungen einer Heizung ist hier eine Mehrzahl von Betriebstakten der Heizung mit einer Taktfrequenz gemeint. In einer weiteren Ausführungsvariante kann der Einspritzzeitpunkt so festgelegt sein, dass nachfolgend zu einer Zufuhr von flüssigem Additiv eine festgelegte Serie von Aktivierungen der Heizung erfolgt.

Der Einspritzzeitpunkt und/oder die Einspritzdauer können nicht nur an die Taktfrequenz der Aktivierung der Heizung angepasst werden. Alternativ oder zusätzlich ist es auch möglich, dass der Einspritzzeitpunkt und/oder die Einspritzdauer an die Taktlänge der Aktivierung der Heizung oder an eine Heizperiode des Betriebs der Heizung während eines einzelnen Betriebstaktes angepasst werden. Mit der Heizperiode ist hier insbesondere eine Dauer des Betriebs der Heizung während eines einzelnen Taktes der Taktfrequenz gemeint.

Der Einspritzzeitpunkt entspricht beispielsweise dem Öffnungszeitpunkt eines Injektors an der Zufuhrstelle, mit welchem die Zufuhr von flüssigem Additiv zu der Abgasbehandlungsvorrichtung gesteuert werden kann. Die Einspritzdauer entspricht dann insbesondere dem Zeitraum, welcher sich an den Einspritzzeitpunkt anschließt und während dem der Injektor geöffnet ist. An die Einspritzdauer schließt sich ein Schließzeitpunkt an, zu dem der Injektor wieder geschlossen wird.

Im Rahmen der Erfindung wird auch ein Kraftfahrzeug vorgeschlagen, aufweisend eine Verbrennungskraftmaschine und eine Abgasbehandlungsvorrichtung zur Reinigung der Abgase der Verbrennungskraftmaschine sowie eine Kontrolleinheit, welche dazu konzipiert und eingerichtet ist, die Abgasbehandlungsvorrichtung nach dem beschriebenen Verfahren zu betreiben.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht begrenzt ist. Insbesondere ist darauf hinzuweisen, dass die Figuren und insbesondere die dargestellten Größenverhältnisse nur schematisch sind. Es zeigen:
- Fig. 1:: eine erste Ausführungsvariante einer Abgasbehandlungsvorrichtung;
- Fig. 2:: eine zweite Ausführungsvariante einer Abgasbehandlungsvorrichtung;
- Fig. 3:: eine dritte Ausführungsvariante einer Abgasbehandlungsvorrichtung;
- Fig. 4:: eine vierte Ausführungsvariante einer Abgasbehandlungsvorrichtung;
- Fig. 5:: ein Blockdiagramm, welches den Ablauf des beschriebenen Verfahrens zeigt;
- Fig. 6:: ein Diagramm, welches den Betrieb einer Abgasbehandlungsvorrichtung zeigt;
- Fig. 7:: einen beheizbaren Wabenkörper.

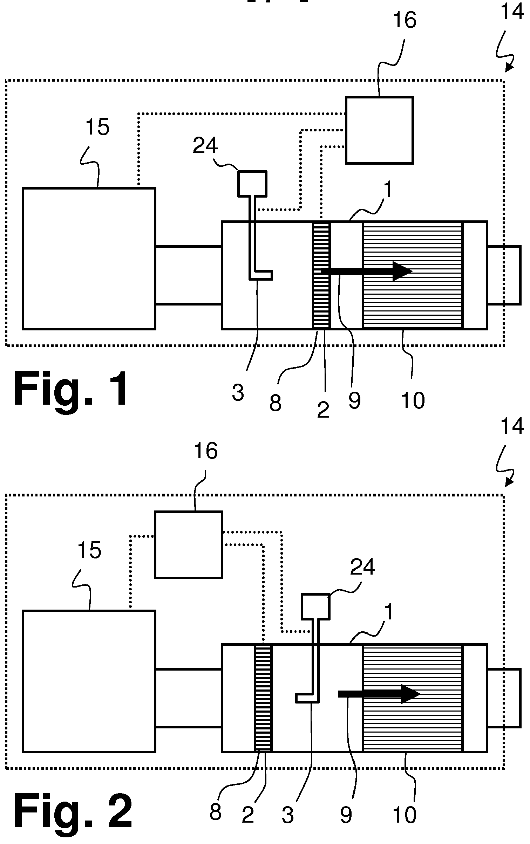

Die Fig. 1 bis 4 zeigen verschiedene Ausführungsvarianten einer Abgasbehandlungsvorrichtung, welche nach dem beschriebenen Verfahren betrieben werden kann, deren gemeinsame Merkmale hier zunächst gemeinsam erläutert werden sollen. Gezeigt ist jeweils die Abgasbehandlungsvorrichtung 1 in einem Kraftfahrzeug 14, welches eine Verbrennungskraftmaschine 15 aufweist. Die Abgasbehandlungsvorrichtung 1 ist dazu eingerichtet und vorgesehen, die von der Verbrennungskraftmaschine 15 produzierten Abgase zu reinigen. Die Abgase durchströmen die Abgasbehandlungsvorrichtung 1 mit einer Abgasströmungsrichtung 9. In der Abgasbehandlungsvorrichtung 1 ist jeweils eine Zufuhrstelle 3 vorgesehen, über welche ein Additiv zugeführt werden kann. Die Zufuhrstelle 3 wird von einer Additivversorgung 24 mit Additiv versorgt und kann eine Düse, ein Ventil, einen Injektor oder dergleichen umfassen. In der Abgasbehandlungsvorrichtung 1 ist jeweils ein als beheizbarer Katalysatorträger 8 ausgeführte Heizung 2 zur Heizung der Abgase in der Abgasbehandlungsvorrichtung 1 vorgesehen. Die Heizung 2 wird von einer Kontrolleinheit 16 gesteuert, welche die Heizung 2 (durch Bestromung) aktivieren und deaktivieren kann.

Bei den Ausführungsvarianten gemäß den Fig. 1 und 2 ist in der Abgasbehandlungsvorrichtung 1 in Abgasströmungsrichtung 9 hinter der Zufuhrstelle 3 (und insbesondere auch hinter der Heizung 2) jeweils ein SCR-Katalysator 10 vorgesehen, in welchem das Verfahren der selektiven katalytischen Reduktion durchgeführt werden kann. Als Additiv wird bei den Ausführungsvarianten gemäß den Fig. 1 und 2 jeweils Reduktionsmittel und insbesondere Harnstoff-Wasser-Lösung zugeführt. Bei der Ausführungsvariante gemäß Fig. 1 ist die Zufuhrstelle 3 in Abgasströmungsrichtung 9 vor der Heizung 2 angeordnet. Bei der Ausführungsvariante gemäß Fig. 2 ist die Zufuhrstelle 3 in Abgasströmungsrichtung 9 hinter der Heizung 2 angeordnet.

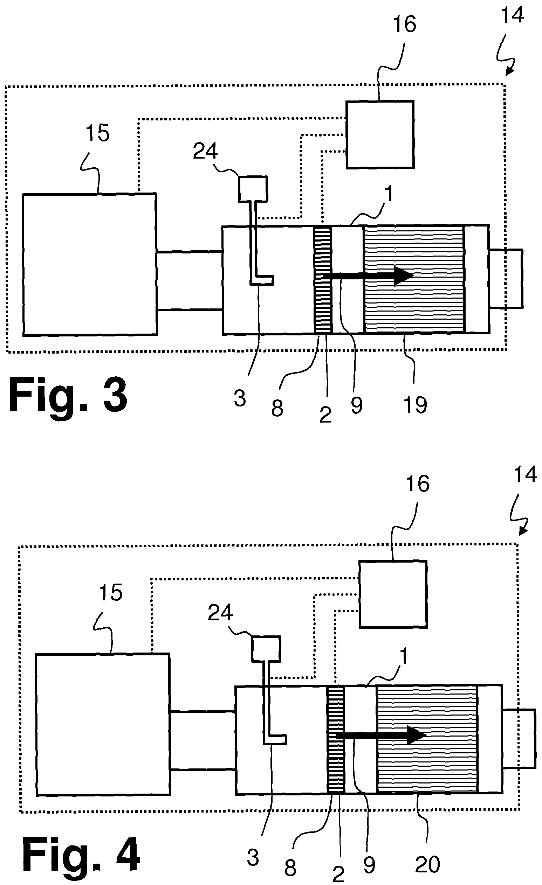

In der Ausführungsvariante gemäß Fig. 3 ist in Abgasströmungsrichtung 9 in der Abgasbehandlungsvorrichtung 1 hinter der Zufuhrstelle 3 (und bevorzugt auch hinter der Heizung 2) ein Adsorber 19 (insbesondere ein Adsorberkatalysator) vorgesehen, in welchem bestimmte Schadstoffbestandteile, welche im Abgas der Verbrennungskraftmaschine 15 sind, zwischengespeichert werden können. Als Additiv wird bei dieser Ausführungsvariante über die Zufuhrstelle 3 vorzugsweise Kohlenwasserstoff (bzw. insbesondere Kraftstoff) zugeführt.

Bei der Ausführungsvariante gemäß Fig. 4 ist in der Abgasbehandlungsvorrichtung 1 in Abgasströmungsrichtung 9 hinter der Zufuhrstelle 3 (und bevorzugt auch hinter der Heizung 2) ein Oxidationskatalysator 20 vorgesehen, in welchem bestimmte Schadstoffe im Abgas der Verbrennungskraftmaschine 15 umgesetzt werden können. Als Additiv wird bei dieser Ausführungsvariante an der Zufuhrstelle 3 vorzugsweise Kohlenwasserstoff (und insbesondere Kraftstoff) zugeführt, welcher in der Abgasbehandlungsvorrichtung 1 verbrannt werden kann, um die Temperatur in dem Oxidationskatalysator 20 zu erhöhen und so bestimmte Umsetzungsreaktionen in dem Oxidationskatalysator 20 zu aktivieren.

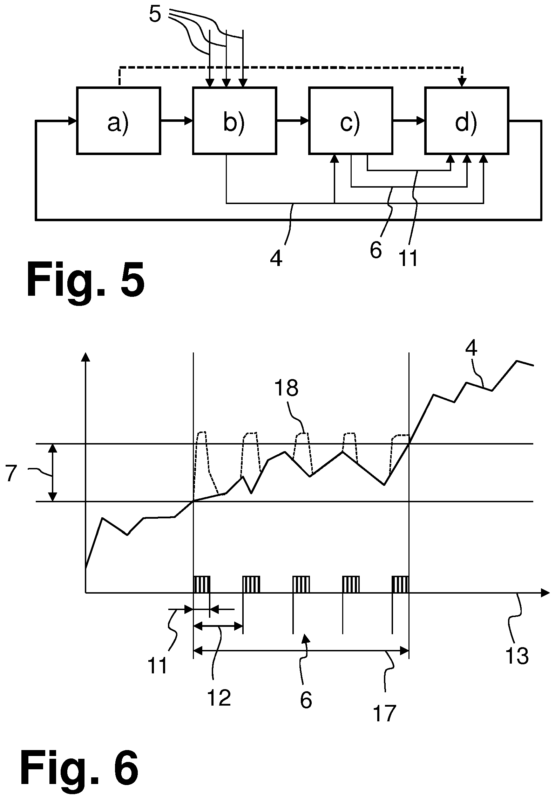

Fig. 5 zeigt ein Ablaufdiagramm einer Ausführungsvariante des beschriebenen Verfahrens. Dargestellt sind die Verfahrensschritte a), b), c) und d), welche aufeinanderfolgend durchgeführt werden. Die Verfahrensschritte a), b), c) und d) können zusammen nach Art einer Schleife wiederholt werden. In Schritt a) erfolgt zunächst eine Zugabe von Additiv. Die Zugabe von Additiv in Schritt a) ist eine Voraussetzung dafür, dass die folgenden Verfahrensschritte b), c) und d) eingeleitet werden. Das beschriebene Verfahren wird vorzugsweise immer dann ausgeführt, wenn eine Zufuhr von Additiv in die Abgasbehandlungsvorrichtung erfolgt. Die Verfahrensschritte b), c), und d) müssen nicht für jede Durchführung des Verfahrensschritt a) durchgeführt werden Es reicht beispielsweise aus, wenn die Verfahrensschritte so regelmäßig durchgeführt werden, dass Ablagerungen auf der Heizung rechtzeitig erkannt und mit dem Verfahren beseitigt werden können. Im Verfahrensschritt b) wird aus verschiedenen Zustandsgrößen 5 der Abgasbehandlungsvorrichtung ein Betriebszustand 4 ermittelt bzw. berechnet. Dieser Betriebszustand 4 wird von dem Verfahrensschritt b) für die Verfahrensschritte c) und d) zur Verfügung gestellt. In Verfahrensschritt c) werden, wenn der Betriebszustand 4 in einem bestimmten Betriebszustandsbereich liegt, eine Taktfrequenz 6 und eine Heizperiode 11 (bzw. eine Heizperiodenlänge) bestimmt. Auch die Taktfrequenz 6 und die Heizperiode 11 werden für den Schritt d) zur Verfügung gestellt. In dem Verfahrensschritt d) wird eine Heizung in einer Abgasbehandlungsvorrichtung dann mit der Taktfrequenz 6 und der Heizperiode 11 betrieben, wenn der Betriebszustand 4 in einem bestimmten Betriebszustandsbereich liegt.

Fig. 6 zeigt ein Diagramm des Betriebs einer Abgasbehandlungsvorrichtung 1 nach einem der hier beschriebenen Verfahren. Auf der waagerechten Achse ist eine Betriebszeit 13 einer Abgasbehandlungsvorrichtung 1 bzw. einer an die Abgasbehandlungsvorrichtung 1 angeschlossenen Verbrennungskraftmaschine 15 aufgetragen. Auf der senkrechten Achse ist der Betriebszustand 4 der Abgasbehandlungsvorrichtung 1 aufgetragen. Markiert ist auch ein Betriebszustandsbereich 7. Für das Zeitintervall 17 liegt der Betriebszustand 4 in dem Betriebszustandsbereich 7. In dem Zeitintervall 17 wird daher die Abgasbehandlungsvorrichtung 1 nach dem beschriebenen Verfahren betrieben. Eine Heizung 2 wird dabei mit einer Taktfrequenz 6 und einer sich daraus ergebenden Taktlänge 12 getaktet betrieben, wobei in jeder Taktlänge 12 eine Heizperiode 11 vorgesehen ist. Zur Veranschaulichung der Auswirkung der Heizung ist in der Fig. 6 auch ein Heizungstemperatur 18 vorgesehen. Die Heizungstemperatur 18 registriert immer dann Ausschläge, wenn die Heizung 2 aktiviert ist. Die Ausschläge der Heizungstemperatur 18 sind gerade so stark gewählt, dass Ablagerungen auf der Heizung 2 effektiv abgebrannt werden bzw. abgetragen werden.

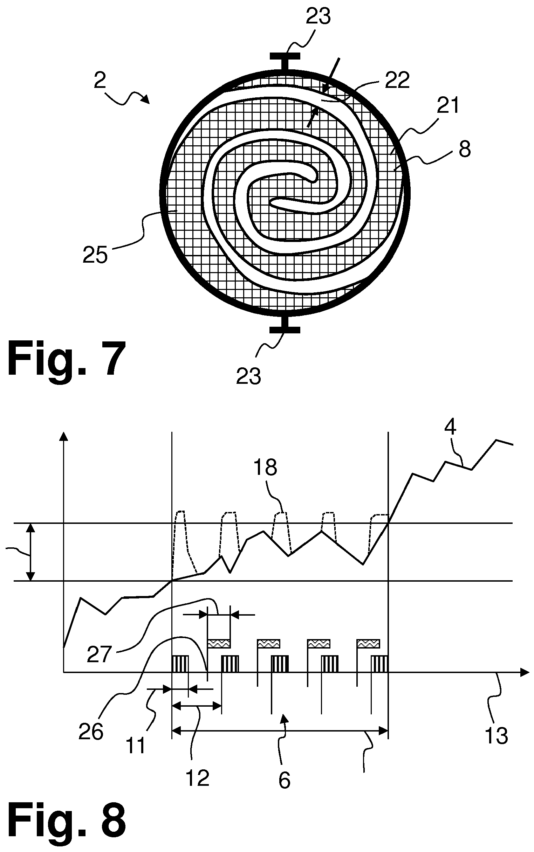

Fig. 7 zeigt eine als beheizbarer Wabenkörper 8 ausgeführte Heizung 2. Der Wabenkörper 8 ist s-förmig ausgeführt und weist Kanäle 21 auf, welche für das Abgas durchströmbar sind. Der Wabenkörper 8 ist aus s-förmig gewundenen einem Packet an glatten und gewellten metallischen Lagen (vorzugsweise Folien) hergestellt. Um mechanisch stabil zu sein weil ein solcher Wabenkörper 8 vorzugsweise mit elektrisch isolierten Stützstiften an einem hier nicht dargestellten Stützwabenkörper abgestützt. An dem Wabenkörper 8 sind Anschlüsse 23 vorgesehen, um einen elektrischen Heizstrom in den Wabenkörper 8 einzuleiten. Der Wabenkörper 8 weist eine als Spalt oder mit Isoliermaterial ausgeführte Isolierung 22 auf, die einen Strompfad durch den Wabenkörper 8 vorgibt über welchen die Anschlüsse 23 miteinander verbunden sind. Der Aufbau eines solchen beheizbaren Wabenkörpers 8 ist beispielsweise in der Europäischen Patentschrift EP 0 541 585 B1 beschrieben. Wenn die Kanäle 21 des Katalysatorträgers 8 durch Ablagerungen verstopft sind, durchströmt das Abgas weniger. Dadurch ergibt sich ein erhöhter Gegendruck der Abgasbehandlungsvorrichtung 1 und eine effektive Aufheizung des Abgasstroms durch den Wabenkörper 8 wird verhindert. Der beheizbare Wabenkörper 8 hat eine Oberfläche 25, die aufgeheizt wird, wenn der beheizbare Wabenkörper 8 betrieben wird.

Die Fig. 8 zeigt eine Abwandlung des Diagramms aus Fig. 6. Die für die Fig. 6 bereits erläuterten Bezugszeichen finden sich auch in dem Diagramm in Fig. 8 wieder und bedürfen daher keiner erneuten Erläuterung. Zusätzlich ist in Fig. 8 die Zufuhr eines flüssigen Additivs dargestellt. Die Zufuhr von flüssigem Additiv erfolgt jeweils zu einem Einspritzzeitpunkt 26 und mit einer Einspritzdauer 27. Der Einspritzzeitpunkt 26 und die Einspritzdauer 27 können an den Betrieb der Heizung und insbesondere an die Taktfrequenz 6 des Betriebs der Heizung, an die Taktlänge 12 und/oder an die Heizperiode 11 der Heizung angepasst werden.

Das beschriebene Verfahren ermöglicht es, eine Heizung in einer Abgasbehandlungsvorrichtung 1 so zu betreiben, dass Ablagerungen auf der Heizung 2 effektiv vermieden bzw. entfernt werden, ohne dass ein unnötig großer Einsatz von Heizenergie notwendig ist.

### Bezugszeichenliste

- 1: Abgasbehandlungsvorrichtung
- 2: Heizung
- 3: Zufuhrstelle
- 4: Betriebszustand
- 5: Zustandsgröße
- 6: Taktfrequenz
- 7: Betriebszustandsbereich
- 8: Wabenkörper
- 9: Abgasströmungsrichtung
- 10: SCR-Katalysator
- 11: Heizperiode
- 12: Taktlänge
- 13: Betriebszeit
- 14: Kraftfahrzeug
- 15: Verbrennungskraftmaschine
- 16: Kontrolleinheit
- 17: Zeitintervall
- 18: Heizungstemperatur
- 19: Adsorber
- 20: Oxidationskatalysator
- 21: Kanal
- 22: Isolierung
- 23: Anschluss
- 24: Additivversorgung
- 25: Oberfläche
- 26: Einspritzzeitpunkt
- 27: Einspritzdauer

## Patentansprüche

1. Verfahren zum Betreiben einer Abgasbehandlungsvorrichtung (1) mit einer elektrischen Heizung (2) zum Heizen zumindest eines Abgasstroms oder einer Oberfläche (25) in der Abgasbehandlungsvorrichtung (1) und mit einer Zufuhrstelle (3) zur Zufuhr eines Additivs in die Abgasbehandlungsvorrichtung (1), so dass das Additiv auf die elektrische Heizung (2) trifft, aufweisend die folgenden Schritte:
a) Zufuhr von Additiv an der Zufuhrstelle (3);
b) Feststellen eines Betriebszustandes (4) der Abgasbehandlungsvorrichtung (1), in dem Ablagerungen auf der elektrischen Heizung (2) auftreten können, anhand zumindest einer Zustandsgröße (5);
c) Festlegen einer Taktfrequenz (6) in Abhängigkeit des Betriebszustandes (4), wenn der in Schritt b) festgestellte Betriebszustand (4) in einem vorgegebenen Betriebszustandsbereich (7) liegt;
d) Getaktetes Aktivieren und Deaktivieren der elektrischen Heizung (2) mit der festgelegten Taktfrequenz (6), wenn der in Schritt b) festgestellte Betriebszustand (4) in dem vorgegebenen Betriebszustandsbereich (7) liegt.

2. Verfahren nach Patentanspruch 1, wobei die Heizung (2) einen elektrisch beheizbarer Wabenkörper (8) umfasst.

3. Verfahren nach einem der vorhergehenden Patentansprüche, wobei das Additiv ein Reduktionsmittel ist und in einer Abgasströmungsrichtung (9) hinter der Zufuhrstelle (3) zumindest ein SCR-Katalysator (10) in der Abgasbehandlungsvorrichtung (1) angeordnet ist.

4. Verfahren nach einem der vorhergehenden Patentansprüche, wobei in Schritt b) zumindest eine der folgenden Zustandsgrößen (5) zum Feststellen des Betriebszustandes (4) verwendet wird:
- zumindest eine Temperatur;
- ein Massenstrom des Additiv durch die Zufuhrstelle (3) in die Abgasbehandlungsvorrichtung (1) hinein; und
- ein Massenstrom des Abgasstroms in der Abgasbehandlungsvorrichtung (1).

5. Verfahren nach einem der vorhergehenden Patentansprüche, wobei in Schritt c) neben der Taktfrequenz (6) auch eine Heizperiode (11) festgelegt wird, mit welcher die Heizung (2) während der Taktlänge (12) der Taktfrequenz (6) jeweils betrieben wird.

6. Verfahren nach einem der vorhergehenden Patentansprüche, wobei die Taktfrequenz (6) so gewählt ist, dass die Heizung (2) zu weniger als 20 Prozent der Betriebszeit (13) der Abgasbehandlungsvorrichtung (1) aktiviert ist, während welcher der Betriebszustand (4) der Abgasbehandlungsvorrichtung (1) in dem vorgegebenen Betriebszustandsbereich (7) liegt.

7. Verfahren nach einem der vorhergehenden Patentansprüche, wobei eine Temperatur des Abgasstroms in der Abgasbehandlungsvorrichtung (1) durch den getakteten Betrieb der Heizung (2) um weniger als 50 C angehoben wird.

8. Verfahren nach einem der Patentansprüche 1 bis 7, wobei die Zufuhrstelle (3) in einer Abgasströmungsrichtung (9) durch die Abgasbehandlungsvorrichtung (1) vor der Heizung (2) angeordnet ist und das Additiv mit der Abgasströmungsrichtung (9) zugegeben wird.

9. Verfahren nach der Patentansprüche 1 bis 7, wobei die Zufuhrstelle (3) in einer Abgasströmungsrichtung (9) durch die Abgasbehandlungsvorrichtung (1) hinter der Heizung (2) angeordnet ist und das Additiv entgegen der Abgasströmungsrichtung (9) zugegeben wird.

10. Verfahren nach einem der vorhergehenden Patentansprüche, wobei die Zufuhr von Additiv in Schritt a) an zumindest einem vorgegebenen Einspritzzeitpunkt (26) erfolgt, wobei dieser zumindest eine vorgegebene Einspritzzeitpunkt (26) zumindest an die Taktfrequenz (6) der Aktivierung der Heizung (2) angepasst ist.

11. Kraftfahrzeug (14), aufweisend eine Verbrennungskraftmaschine (15) und eine Abgasbehandlungsvorrichtung (1) zur Reinigung der Abgase der Verbrennungskraftmaschine (15) sowie ein Kontrolleinheit (16), welche dazu konzipiert und eingerichtet ist, die Abgasbehandlungsvorrichtung (1) nach einem Verfahren gemäß einem der vorhergehenden Patentansprüche zu betreiben.

## Claims

1. Method for operating an exhaust-gas treatment device (1), having an electric heater (2) for heating at least one exhaust-gas stream or a surface (25) in the exhaust-gas treatment device (1), and having a feed point (3) for feeding an additive into the exhaust-gas treatment device (1) such that the additive impinges on the electric heater (2), having the following steps:
a) feeding additive at the feed point (3);
b) identifying, on the basis of at least one state variable (5), an operating state (4) of the exhaust-gas treatment device (1) in which deposits can form on the electric heater (2);
c) setting a cycle frequency (6) as a function of the operating state (4) if the operating state (4) identified in step b) lies in a predefined operating state range (7);
d) cyclically activating and deactivating the electric heater (2) at the set cycle frequency (6) if the operating state (4) identified in step b) lies in the predefined operating state range (7).

2. Method according to Patent Claim 1, wherein the heater (2) comprises an electrically heatable honeycomb body (8).

3. Method according to one of the preceding patent claims, wherein the additive is a reducing agent, and at least one SCR catalyst (10) is arranged in the exhaust-gas treatment device (1) downstream of the feed point (3) as viewed in an exhaust-gas flow direction (9).

4. Method according to one of the preceding patent claims, wherein, in step b), at least one of the following state variables (5) is used for identifying the operating state (4):
- at least one temperature;
- a mass flow of the additive through the feed point (3) into the exhaust-gas treatment device (1); and
- a mass flow of the exhaust-gas stream in the exhaust-gas treatment device (1).

5. Method according to one of the preceding patent claims, wherein, in step c), not only the cycle frequency (6) but also a heating period (11), over which the heater (2) is operated during each cycle length (12) of the cycle frequency (6), is set.

6. Method according to one of the preceding patent claims, wherein the cycle frequency (6) is selected such that the heater (2) is activated for less than 20 per cent of that operating time (13) of the exhaust-gas treatment device (1) during which the operating state (4) of the exhaust-gas treatment device (1) lies in the predefined operating state range (7).

7. Method according to one of the preceding patent claims, wherein a temperature of the exhaust-gas stream in the exhaust-gas treatment device (1) is raised by less than 50°C as a result of the cyclic operation of the heater (2).

8. Method according to one of Patent Claims 1 to 7, wherein the feed point (3) is arranged upstream of the heater (2) as viewed in an exhaust-gas flow direction (9) through the exhaust-gas treatment device (1), and the additive is metered in in the exhaust-gas flow direction (9).

9. Method according to Patent Claims 1 to 7, wherein the feed point (3) is arranged downstream of the heater (2) as viewed in an exhaust-gas flow direction (9) through the exhaust-gas treatment device (1), and the additive is metered in counter to the exhaust-gas flow direction (9).

10. Method according to one of the preceding patent claims, wherein the feed of additive in step a) takes place at at least one predefined injection time (26), wherein said at least one predefined injection time (26) is adapted at least to the cycle frequency (6) of the activation of the heater (2).

11. Motor vehicle (14) having an internal combustion engine (15) and having an exhaust-gas treatment device (1) for the purification of the exhaust gases of the internal combustion engine (15) and having a control unit (16) which is designed and set up to operate the exhaust-gas treatment device (1) in accordance with a method according to one of the preceding patent claims.

## Revendications

1. Procédé pour faire fonctionner un dispositif (1) de traitement des gaz d'échappement, comprenant un chauffage (2) électrique pour chauffer au moins un courant de gaz d'échappement ou une surface (25) dans le dispositif (1) de traitement des gaz d'échappement et comprenant un point (3) d'apport d'un additif au dispositif (1) de traitement des gaz d'échappement, de manière à ce que l'additif atteigne le chauffage (2) électrique, comportant les stades suivants :
a) apport d'additif au point (3) d'apport ;
b) constatation d'un état (4) de fonctionnement du dispositif (1) de traitement des gaz d'échappement, dans lequel des dépôts peuvent apparaître sur le chauffage (2) électrique, à l'aide d'au moins une grandeur (5) d'état ;
c) fixation d'une fréquence (6) de répétition en fonction de l'état (4) de fonctionnement, si l'état (4) de fonctionnement constaté au stade b) est dans une plage (7) d'état de fonctionnement donnée à l'avance ;
d) activation et désactivation en cadence du chauffage (2) électrique à la fréquence (6) de répétition fixée, si l'état (4) de fonctionnement constaté au stade b) se trouve dans la plage (7) d'état de fonctionnement donnée à l'avance.

2. Procédé suivant la revendication 1, dans lequel le chauffage (2) comprend un corps (8) en nid-d'abeilles pouvant être chauffé électriquement.

3. Procédé suivant l'une des revendications précédentes, dans lequel l'additif est un agent réducteur et il est monté, dans le dispositif (1) de traitement des gaz d'échappement, au moins un pot (10) catalytique SCR derrière, dans le sens (9) de passage des gaz d'échappement, le point (3) d'apport.

4. Procédé suivant l'une des revendications précédentes, dans lequel on utilise au stade b) au moins l'une des grandeurs (5) d'état suivantes pour constater l'état (4) de fonctionnement :
- au moins une température ;
- un courant massique de l'additif passant par le point (3) d'apport dans le dispositif (1) de traitement des gaz d'échappement et
- un courant massique du courant de gaz d'échappement dans le dispositif (1) de traitement des gaz d'échappement.

5. Procédé suivant l'une des revendications précédentes, dans lequel on fixe au stade c), outre la fréquence (6) de répétition, également une période (11) de chauffage, à laquelle on fait fonctionner le chauffage (2) pendant la longueur (12) de répétition de la fréquence (6) de répétition.

6. Procédé suivant l'une des revendications précédentes, dans lequel on choisit la fréquence (6) de répétition, de manière à activer le chauffage (2) pendant moins de 20 pour-cent du temps (13) de fonctionnement du dispositif (1) de traitement des gaz d'échappement, pendant lequel l'état (4) de fonctionnement du dispositif (1) de traitement des gaz d'échappement se trouve dans la plage (7) d'état de fonctionnement donnée à l'avance.

7. Procédé suivant l'une des revendications précédentes, dans lequel on élève de moins de 50°C une température du courant des gaz d'échappement dans le dispositif (1) de traitement des gaz d'échappement par le fonctionnement en en cadence du chauffage (2).

8. Procédé suivant l'une des revendications 1 à 7, dans lequel on met le point (3) d'apport dans le sens (9) de passage des gaz d'échappement dans le dispositif (1) de traitement des gaz d'échappement avant le chauffage (2) et on ajoute l'additif par le sens (9) de passage des gaz d'échappement.

9. Procédé suivant l'une des revendications 1 à 7, dans lequel on met le point (3) d'apport dans un sens (9) de passage des gaz d'échappement dans le dispositif (1) de traitement des gaz d'échappement, derrière le chauffage (2), et on ajoute l'additif dans le sens contraire au sens (9) de passage des gaz d'échappement.

10. Procédé suivant l'une des revendications précédentes, dans lequel on effectue l'apport de l'additif au stade a) à au moins un instant (26) d'injection donné à l'avance, cet au moins un instant (26) d'injection donné à l'avance étant adapté au moins à la fréquence (6) de répétition de l'activation du chauffage (2).

11. Véhicule (14) automobile, comprenant un moteur à combustion interne et un dispositif (1) de traitement des gaz d'échappement pour épurer les gaz d'échappement du moteur (15) à combustion interne, ainsi qu'une unité (16) de commande, conçue et agencée pour faire fonctionner le dispositif (1) de traitement des gaz d'échappement par un procédé suivant l'une des revendications précédentes.
